# EUROPÄISCHE PATENTSCHRIFT

(11) **EP 2 061 664 B1**
(45) Veröffentlichungstag und Bekanntmachung des Hinweises auf die Patenterteilung: **28.07.2010**
(21) Anmeldenummer: 07802248.0
(22) Anmeldetag: 10.09.2007
(51) Int. Cl.: B60C 23/04

(54) **FAHRZEUGREIFENDRUCKMESSEINHEIT**
MOTOR VEHICLE TIRE PRESSURE MEASURING DEVICE
UNITÉ DE MESURE DE PRESSION DES PNEUS DE VÉHICULE

(30) Priorität: 11.09.2006 DE 102006042565
(43) Veröffentlichungstag der Anmeldung: 27.05.2009
(73) Patentinhaber: Global Dynamix AG, 7500 St. Moritz (CH)
(72) Erfinder: ACHTERHOLT, Rainer, 8597 Landschlacht (CH)
(74) Vertreter: Samson & Partner
(86) Internationale Anmeldenummer: PCT/EP2007/007878
(87) Internationale Veröffentlichungsnummer: WO 2008/031552

(56) Entgegenhaltungen:
- EP-A- 1 361 080
- EP-A- 1 428 693
- US-A- 5 540 092
- US-A- 6 163 255

## Beschreibung

### GEBIET DER ERFINDUNG

Die vorliegende Erfindung betrifft im Allgemeinen den Bereich der Druckmessung für Fahrzeugreifen.

### HINTERGRUND DER ERFINDUNG

Zur Erfassung von Reifendrücken eines Fahrzeugreifens ist es bekannt, innerhalb des Fahrzeugreifens, beispielsweise am Ventil eine Messvorrichtung anzuordnen. Ferner ist es bekannt, von einer solchen Messvorrichtung erzeugte, erfasste Reifendrücke angebende Daten drahtlos, beispielsweigse zu einer zentralen Fahrzeugsteuerung zu übermitteln.

Nachteile bekannter Ansätze umfassen deren Gesamtgewicht, das zu Unwucht von Fahrzeugrädern führen kann. Bei Anordnung am Ventil kann dies ferner zum Verkippen und/oder Verdrehen des Ventils bis hin zur Undichtigkeit des Ventils und damit zu Druckverlust des Fahrzeugreifens führen.

Ferner weisen bekannte Ansätze komplexe und komplizierte Bauweisen auf, die zu zeit- und kostenaufwändigen Fertigungsschritten führen.

Beispielsweise offenbart EP 1 361 080 A1 eine Fahrzeugreifendruckmesseinheit nach dem Oberbegriff von Anspruch 1.

US-A-6 163 255 offenbart ein Snap-In-Ventil mit einer integrierten Reifendruckmesseinrichtung. Diese ist über eine Gewindeverbindung mit dem Ventilkörper verschraubt.

### AUFGABE DER ERFINDUNG

Aufgabe der vorliegenden Erfindung ist es, einfacher aufgebaute, leichtere und kostenganstigere Lösungen zu Erfassung von Fahrzeugreifendrücken bereitzustellen.

### KURZE BESCHREIBUNG DER ERFINDUNG

Zur Lösung der Aufgabe stellt die Erfindung eine Fahrzeugreifendruckmesseinheit, ein Befestigungselement, ein Ventil, eine Kombination eines Befestigungselementes und einer Reifendruckmessvorrichtung sowie die Verwendung einer Reifendruckmessvorrichtung gemäss den unabhängigen Ansprüchen bereit.

Die erfindungsgemäße Fahrzeugreifendruckmesseinheit umfasst ein Ventil und ein Befestigungselement, mit dem eine Reifendruckmessvorrichtung am Ventil befestigt werden kann.

Insbesondere ist es vorgesehen, dass das Befestigungselement einen ersten Befestigungsbereich aufweist, mit dem eine Rast- und/oder Schnappverbindung mit einem an dem Ventil komplementär ausgeformten, zweiten Befestigungsbereich hergestellt werden kann, um das Befestigungselement und das Ventil aneinander zu sichern. Das Befestigungselement umfasst eine Aufnahme zur Anordnung der Reifendruckmessvorrichtung in dem Befestigungselement. Die Aufnahme des Befestigungselementes weist einen Bereich auf, der sich in den ersten Befestigungsbereich hinein erstreckt.

### KURZE BESCHREIBUNG DER FIGUREN

Unter Bezugnahme auf die beigefügten, schematischen Zeichnungen sind im Folgenden Ausihrungsformen der Erfindung beispielhaft näher erläutert. In diesen zeigen:
- Fig. 1: eine schematische Schnittansicht einer Ausführungsform einer er- findungsgemäßen Fahrzeugreifendruckmesseinheit;
- Fig. 2: eine Querschnittsansicht einer Ausführungsform eines erfindungs- gemäßen Ventils;
- Fig. 3: eine Querschnittsansicht einer Ausführungsform eines erfindungs- gemäßen Befestigungselements;
- Fig. 4: eine Querschnittsansicht einer Ausführungsform einer erfindungs- gemäßen Reifendruckmessvorrichtung, und
- Fig. 5: eine Aufsicht auf eine Ausführungsform eines erfindungsgemäßen Befestigungselements.

### BESCHREIBUNG BEVORZUGTER AUSFÜHRUNGSFORMEN

Vor einer Beschreibung von vorgesehenen Ausführungsformen folgen zunächst allgemeine Erläuterungen zur Erfindung.

Die Ausgestaltung der Aufnahme mit einem sich in den ersten Befestigungsbereich erstrekkenden Bereich, erlaubt eine Verringerung der Gesamtgröße.

Wenigstens der sich in den ersten Befestigungsbereich erstreckende Bereich der Aufnahme kann als Fluidführung ausgebildet sein, um Fluid, mit dem ein Reifen befüllt werden kann, über das Ventil dem Reifen zuführen zu können.

Das Ventil kann ein herkömmliches Schraubventil oder ein Snap-In-Ventil sein.

Die Aufnahme kann aus einem elastischen oder einem festen Material sein; bevorzugt umfasst sie elastisches Material, beispielsweise Kunststoff.

Die Herstellung der Aufnahme kann beispielsweise als Aussparung bei der Herstellung oder als Ausnehmung in einem nachfolgendem Fertigungsschritt erfolgen. Die Aufnahme führt zu einer kleinen Bauform insgesamt.

Vorzugsweise kann die Aufnahme des Befestigungselementes so dimensioniert sein, dass die Reifendruckmessvorrichtung vollständig darin untergebracht werden kann. Dadurch wird erreicht, dass die Reifendruckmessvorrichtung die Bauform insgesamt nicht vergrößert.

Des weiteren wird dadurch auch erreicht, dass bei Raddrehung auf die Fahrzeugreifendruckmesseinheit und deren Verbindung mit einer Felge durch die Masse der Reifendruckmessvorrichtung wirkenden Kräfte verglichen mit herkömmlichen Ansätzen verringert werden können.

Die Aufnahme kann bezüglich einer Längsachse des Befestigungselements, die bei Verwendung bzw. im eingebauten Zustand im Wesentlichen senkrecht zu einer Befestigungsfläche einer Felge verlaufen kann, rotationssymmetrisch ausgebildet sein. Auf diese Weise können Kräfte und/oder Momente vermieden werden, die z.B. ein "Verkippen" der Fahrzeugreifendruckmesseinheit um deren Längsachse bewirken können.

Bei Ausführungsformen ist der erste Befestigungsbereich im zweiten Befestigungsbereich einrastbar oder einschnappbar. Bei anderen Ausführungsformen ist der zweite Befestigungsbereich im ersten Befestigungsbereich einrastbar oder einschnappbar. In allen Fällen können Schraub-, Löt-, Schweiß-, und Nietverbindungen etc. vermieden werden.

Bei einer Ausgestaltung kann die Aufnahme des Befestigungselementes wenigstens einen thermisch verformbaren Bereich umfassen. Dieser kann zur Sicherung des Befestigungselements in der Aufnahme und/oder so verformt werden, dass die Aufnahme wenigstens teilweise an die Form der Reifendruckmessvorrichtung angepasst wird.

Insbesondere kann der thermisch verformbare Bereich so ausgelegt sein, dass die Reifendruckmessvorrichtung formschlüssig und/oder kraftschlüssig in der Aufnahme des Befestigungselementes gesichert werden kann. Der thermisch verformbare Bereich kann dabei an die Form des umgebenen Bereichs der Reifendruckmessvorrichtung angepasst werden. Der thermische verformbare Bereich kann so verformt werden, dass er die Reifendruckmessvorrichtung hintergreift. Weitere Maßnahmen, die Reifendruckmessvorrichtung zu sichern, können, wenn gewünscht, entfallen.

Vorzugsweise umfasst die Aufnahme des Befestigungselementes wenigstens einen Anlagebereich, z.B. mit wenigstens einem Anschlagselement oder ringförmigen Anschlag zur Positionierung der Reifendruckmessvorrichtung beim Zusammenbau und im Betrieb. Der Anlagebereich erreicht eine vorgegebene Positionierung innerhalb der Aufnahme, um etwaige Fehlfunktionen der Reifendruckmessvorrichtungen aufgrund ungenauer und/oder verschobenen Anordnung zu verhindern.

Vorzugsweise können mehrere voneinander beabstandete Anschlagselemente und/oder ringförmige Anschläge verwendet werden, die mit unterschiedlichen Bereichen der Reifendruckmessvorrichtung zusammenwirken.

Eine Ausgestaltung nach den letzten beiden Aspekten ermöglicht eine einfache Kombinationsmöglichkeit der gesamten Fahrzeugreifendruckmesseinheit. Beide Verbindungsmöglichkeiten bieten einen sicheren Halt für die Rast- oder Schnappverbindung.

Im ersten Fall kann der erste Befestigungsbereich wenigstens einen wenigstens teilweise elastischen Bereich für die Rast- und/oder Schnappverbindung aufweisen.

An dem wenigstens einen wenigstens teilweise elastischen Bereich des ersten Befestigungsbereiches kann wenigstens ein elastisch verformbares Segment, Nase oder Raste ausgebildet sein.

Es können zwei, drei, vier usw. Segmente, Nuten und/oder Rasten verwendet werden. Bevorzugt sind z.B. vier Rastsegmente mit jeweils einem viertelkreisförmigen Querschnitt in Längsrichtung betrachtet.

Der erste Befestigungsbereich kann sich von einer Anlagefläche weg erstrecken, die einen Anschlag für den zweiten Befestigungsbereich definieren kann.

Für Ausführungsformen, bei denen der zweite Befestigungsbereich in den ersten Befestigungsbereich eingreifen kann, kann der erste Befestigungsbereich eine Aufnahme zur Aufnahme des zweiten Befestigungsbereichs umfassen. Die Aufnahme kann beispielsweise als Aussparung bei der Fertigung hergestellt werden oder als Ausnehmung nachbearbeitet werden.

Der erste Befestigungsbereich kann wenigstens eine Führungsfläche umfassen, die z.B. an die Aufnahme grenzt und/oder Bewegungen zu dieser und/oder in diese hinein bewirken oder wenigstens unterstützen kann. Die Führungsfläche ist insbesondere vorgesehen, um den zweiten Befestigungsbereich zu führen, wenn eine Verbindung zu dem ersten Befestigungsbereich hergestellt wird. Die Führungsfläche kann konisch verlaufend ausgestaltet sein.

Die Aufnahme des ersten Befestigungsbereichs kann eine oder mehrere Aussparungen, Rasten oder Nut(en) für die Rast- und/oder Schnappverbindung umfassen.

Das Befestigungselement kann wenigstens eine Fluid-Durchgangsöffnung aufweisen. Diese kann im ersten Befestigungsbereich ausgeformt sein. Die wenigstens eine Fluid-Durchgangsöffnung kann in einem zur Anordnung der Reifendruckmessvorrichtung vorgesehenen Bereich des Befestigungselementes angeordnet sein. Es können eine, zwei, drei, vier,... usw. Fluid-Durchgangsöffnungen vorhanden sein. Deren Durchmesser kann zwischen 0,1 mm und 2 mm liegen.

Vorzugsweise stehen die Fluiddurchführungen mit dem Bereich der Aufnahme, der als Fluidführung vorgesehen ist, in Fluidverbindung. Dadurch kann über das Ventil zuführbares Fluid zum Füllen eines Reifens durch die Fluidführung der Aufnahme und von dort durch die Fluiddurchführungen dem Reifen zugeführt werden.

Die Fluid-Durchgangsöffnungen können unregelmäßig oder regelmäßig angeordnet sein.

Das Ventil kann einen Hauptkörper aufweisen.

Vorzugsweise ist der Hauptkörper des Ventils aus einem festen Material hergestellt, z.B. aus Kunststoff, Metall, wie z.B. Messing, und eine Mischung derselben.

Der Hauptkörper kann (wenigstens) teilweise von einem Mantel aus einem elastischen Material umgeben sein. Der Mantel kann zum Einrasten des Ventils in einer Fahrzeugfelge dienen. Hierfür kann der Mantel eine Nut aufweisen, in die ein Rand eines Ventillochs der Fahrzeugreifenfelge einrastbar ist. Alternativ kann die Nut am Hauptkörper ausgebildet sein, wobei auf den Mantel verzichtet werden kann.

Für Ausführungsformen, bei denen der erste Befestigungsbereich im zweiten Befestigungsbereich eingreift, kann der zweite Befestigungsbereich wenigstens eine Aufnahme zur Aufnahme des ersten Befestigungsbereichs umfassen. Diese Aufnahme kann als Aussparung bei der Fertigung hergestellt werden oder als Ausnehmung nachbearbeitet werden.

Der zweite Befestigungsbereich kann wenigstens eine Führungsfläche umfassen, die z.B. an die Aufnahme grenzt und/oder Bewegungen zu dieser und/oder in diese bewirken oder wenigstens unterstützen kann. Die Führungsfläche ist insbesondere vorgesehen, um den ersten Befestigungsbereich zu führen, wenn eine Verbindung zu dem zweiten Befestigungsbereich hergestellt wird.

Bei Ausführungsformen, bei denen der zweite Befestigungsbereich im ersten Befestigungsbereich eingreift, kann der zweite Befestigungsbereich wenigstens einen wenigstens einen wenigstens teilweise elastischen Bereich für die Rast- und/oder Schnappverbindung umfassen. Dieser Bereich kann wenigstens ein elastisches Segment, Nase oder eine Raste aufweisen.

Es ist ferner vorgesehen, dass die Reifendruckmessvorrichtung mittels des Befestigungselementes am Ventil angeordnet ist.

Die Reifendruckmessvorrichtung kann eine Energiezufuhr und einen Drucksensor aufweisen. Die Energiezufuhr kann über eine Lötverbindung angeschlossen sein.

Die Energiezufuhr kann über wenigstens einen kraft- und/oder formschlüssig gehaltenen Kontakt, der von dem Befestigungselement bereitgestellt ist, angeschlossen sein.

Die Energiezufuhr kann als Basis der Reifendruckmessvorrichtung dienen und diese stabilisieren. Weitere Maßnahmen, wie z.B. Träger, Halterungen etc., können dadurch vermieden werden.

Die Energiezufuhr kann so angeordnet sein, dass sie als Abdeckung für die Reifendruckmessvorrichtung dient. Als Abdeckung dienende Bereiche der Energieversorgung können als Dekkel, Verschluss oder dergleichen für das vom Ventil entfernte, offene Ende der Aufnahme des Befestigungselements dienen. Vorzugsweise kann dadurch ein im Wesentlichen fluiddichter Verschluss der Aufnahme des Befestigungselements an der Seite erreicht werden, die bei Verwendung in einen Reifen ragt.

Der als Abdeckung dienende Bereich der Energieversorgung kann alternativ so angeordnet sein, dass er zwischen dem Bereich der Aufnahme des Befestigungselements, der als Fluidführung für zum Reifenbefüllen über das Ventil zuführbares Fluid (z. B. Druckluft) vorgesehen ist, und der Reifendruckmessvorrichtung liegt. Dadurch kann vermieden werden, dass unter Druck zugeführtes Fluid die Reifendruckmessvorrichtung direkt beaufschlagt, was zu Beschädigungen oder während der Fluidzufuhr zu fehlerhaften Messungen führen kann.

Die Energiezufuhr kann eine Batterie umfassen.

Die Reifendruckmessvorrichtung kann eine Platine oder Chip mit einer Steuereinrichtung umfassen. Die Platine oder der Chip kann einen baueinheitlich integrierten Drucksensor umfassen.

Der Drucksensor kann als separate Komponente ausgeführt sein, die z.B. unmittelbar auf der Platine oder dem Chip angeordnet ist.

Die Reifendruckmessvorrichtung kann eine Kommunikationseinheit zur drahtlosen Übertragung von Druckmesssignalen aufweisen. Die Kommunikationseinheit kann auch zur bidirektionalen Kommunikation ausgelegt sein.

Die Kommunikationseinheit kann als separate Komponente ausgeführt sein, die z.B. auf der Platine oder dem Chip angeordnet ist. Die Kommunikationseinheit kann baueinheitlich integriert von der Platine oder dem Chip bereitgestellt sein.

Die Kommunikationseinheit kann eine sich wegstreckende, vorzugsweise elastisch verformbare Antenne aufweisen. Im zusammengebauten Zustand kann die Antenne einen leitenden Bereich des Ventils kontaktieren, über das Signale nach Außen übertragen werden können. Dieser Kontakt kann erreicht werden bzw. verbessert werden, wenn eine elastisch verformbare Antenne im zusammengebauten Zustand durch Kontakt mit dem Ventil verformt bzw. vorgespannt ist. Der Kontakt kann durch Kleben, Löten oder Vergießen erreicht und/oder unterstützt werden. Ein Kontakt ist allerdings nicht zwingend erforderlich. Ein geringer Abstand zwischen Antenne und leitenden Bereichen des Ventils kann ausreichen, um im eingebauten Zustand Signale nach Außen zu übertragen.

Im zusammengebauten Zustand kann sich die Antenne in den ersten Befestigungsbereich hinein, vorzugsweise über diesen hinaus erstrecken.

Die obigen Ausführungen gelten jeweils für das eingangs genannte Befestigungselement, das eingangs genannte Ventil, die eingangs genannte Reifendruckmessvorrichtung, die eingangs genannte Kombination von Reifendruckmessvorrichtung und Befestigungselement entsprechend.

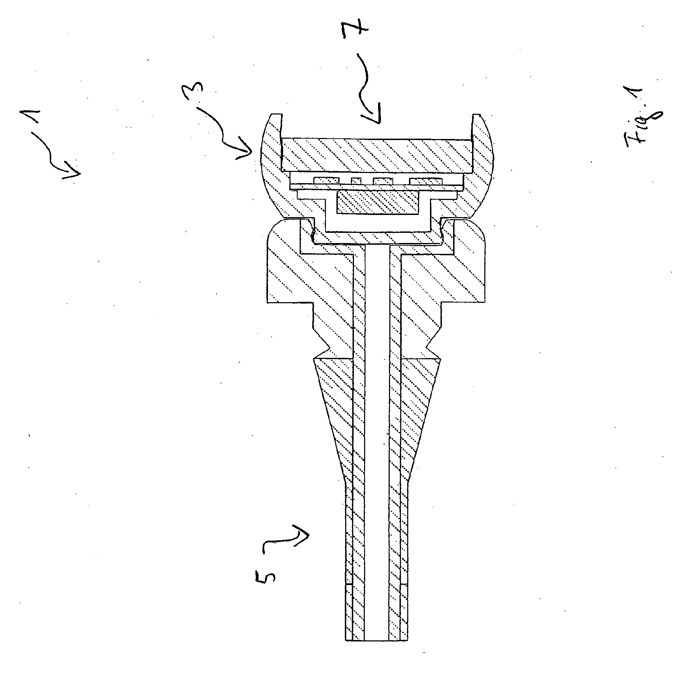

Fig. 1 zeigt eine schematische Schnittansicht der erfindungsgemäßen Fahrzeugreifendruckmesseinheit 1 im zusammengesetzten Zustand. Die Fahrzeugreifendruckmesseinheit 1 umfasst ein Befestigungselement 3, das eine Reifendruckmessvorrichtung 7 aufnimmt und mit einem Ventil 5 über eine Rast- bzw. Schnappverbindung verbunden ist. Zur Veranschaulichung ist das Ventil als Snap-In-Ventil dargestellt.

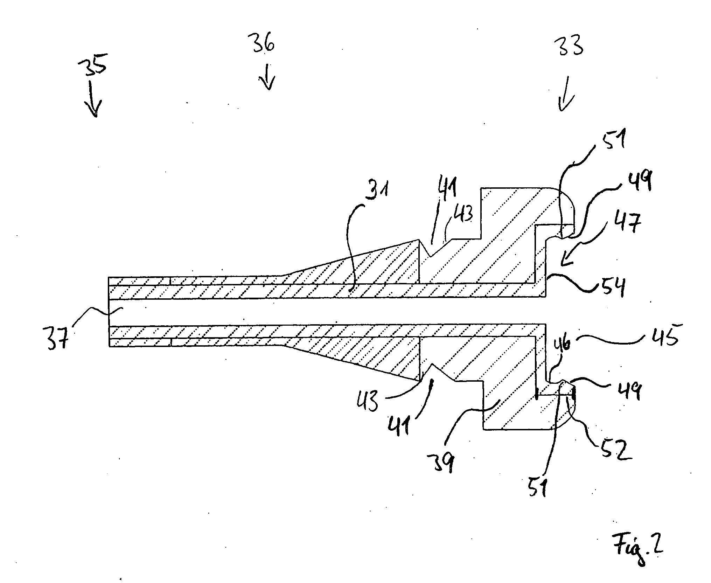

Fig. 2 zeigt eine Querschnittsansicht des Ventils 5. Das Ventil 5 weist einen Ventilschaft 36 auf, der zusammen mit einem Ventilkopf 35 und einem Ventilfuß 33 einen Hauptkörpers 31 bildet. Dieser besteht aus einem festen Material, wie zum Beispiel Metall (z.B. Messing). An dem oberen Ende des Hauptkörpers 31 am Ventilkopf 35 kann ein Gewinde vorgesehen sein, auf das eine Ventilkappe aufgeschraubt werden kann (beides nicht abgebildet). Der Ventilkopf 35 befindet sich normalerweise außerhalb des Fahrzeugreifens (nicht abgebildet).

Weiter umfasst das Ventil 5 einen Mantel 39, der eine Nut 41 aufweist und an seinem unteren Ende an den Ventilfuß 33 grenzt. Die Ventilfuß 33 befindest sich normalerweise innerhalb einer Fahrzeugreifenfelge (nicht abgebildet). Die Nut 41 nimmt in montiertem Zustand des Ventils 5 einen Rand eines Ventillochs (nicht abgebildet) einer Fahrzeugreifenfelge (nicht abgebildet) auf. Der Mantel 39 besteht aus einem elastisch verformbaren Material, beispielsweise Gummi oder Kunststoff. Daher kann dieser bei Montage des Ventils 5 derart verformt oder komprimiert werden, dass das Ventil 5 durch ein Ventilloch (nicht abgebildet) hindurchgezogen werden kann. Nach Austritt aus diesem Ventilloch dekomprimiert bzw. deformiert sich der elastische Mantel 39 derart, dass er für einen festen und dichten Sitz des Ventils 5 im Ventilloch sorgt. Dazu sind die wulstartigen, verstärkte Bereiche 43 jeweils ober- und unterhalb der Nut 41 angeordnet, die das "Einschnappen" des Ventils unterstützen.

Darüber hinaus erstreckt sich der Hauptkörper 31 bis in den Ventilfuß 33 hinein. In dem Ventilfuß 33 befindet sich eine Aufnahme 47. Die Aufnahme 47 bildet einen zweiten Befestigungsbereich 45, der an seiner Seite eine umlaufende Führungsfläche 49 aufweist. Die Führungsfläche 49 läuft konisch zu. Angrenzend an die Führungsfläche 49 befindet sich ein Rast- und/oder Schnapppunkt 51. Daneben schließt eine Vertiefung an, die an eine Anlagefläche 54 angrenzt.

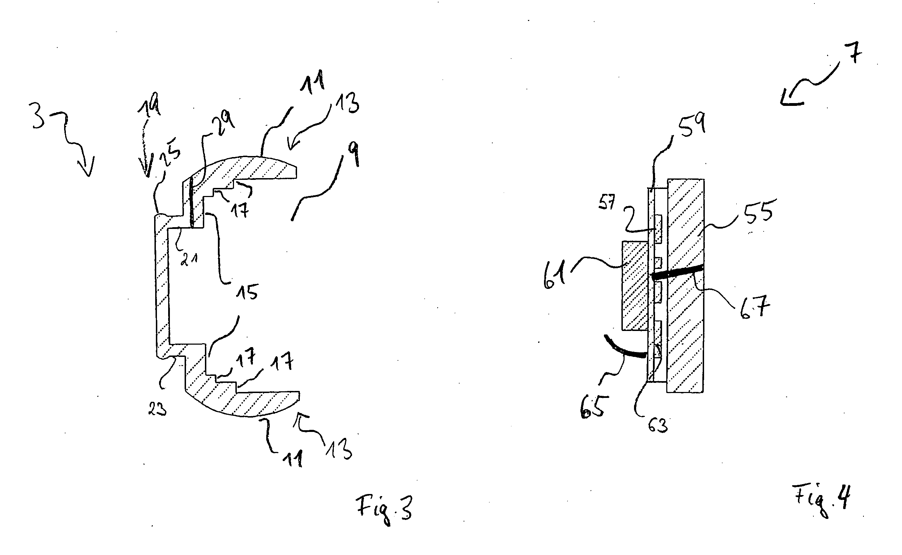

Der Aufnahmebereich 47 des Ventils 5 ist mit dem zweiten Befestigungsbereich 45 in diesem Ausführungsbeispiel dafür ausgelegt, ein Befestigungselement 3, wie in Fig. 1 abgebildet, aufzunehmen. Dabei ist eine Montage des Befestigungselementes 3 in der Aufnahme 47 des Ventils 5 auch ohne spezielle Werkzeuge möglich. Das Befestigungselement 3 wird in das Ventil 5 hineingedrückt. Dazu wirkt eine zum Einrasten des Ventils 5 in dem zweiten Befestigungsbereich 45 ausreichende Kraft auf das Befestigungselement 3 (vgl. auch Fig. 1 und 3).

Fig. 3 zeigt eine Querschnittsansicht des Befestigungselements 3. Das Befestigungselement 3 umfasst ein symmetrisches, zylinderförmig, abgerundetes Gehäuse, aus beispielsweise Kunststoff. Es umfasst Seitenwände 11, die eine sich dazwischen erstreckende Aufnahme 9 seitlich begrenzen. Die Seitenwände 11 umfassen einen thermisch verformbaren Bereich 13. Innerhalb der Aufnahme 9 sind vier Vorsprünge 17 angeordnet, die an eine innere Anlagefläche 15 angrenzen. Angrenzend an die innere Anlagefläche 15 ist ein weiterer Anlagebereich 21 angeordnet. Dazwischen erstreckt sich quer zum Befestigungselement 3 eine Fluid-Durchgangsöffnung 29. Auf der Außenseite des Befestigungselementes 3, angrenzend an die Anlagebereich 21, erstreckt sich ein wenigstens teilweise elastischer Bereich 23 als ein erster Befestigungsbereich 19 mit im wesentlichen steifen überstehenden Rasten 25 und elastischen Segmenten 27.

Die innere Anlagefläche 15 sowie die abgebildeten Vorsprünge bzw. Anschläge 17 dienen zur Positionierung der Reifendruckmessvorrichtung 7 beim Einführen in das Befestigungselement 3 und zur Lagesicherung im zusammengebauten Zustand. Dabei wird die Reifendruckmessvorrichtung 7 vollständig innerhalb des Befestigungselementes 3 aufgenommen. Die Anschläge 17 ermöglichen eine exakte Anlage innerhalb der Aufnahme 9. Die Reifendruckmessvorrichtung 7 liegt dabei auf der inneren Auflagefläche 15 auf und wird gegen die Anschläge 17 abgestützt.

Bei einer Verformung des thermisch verformbaren Randbereichs 13, beispielsweise durch eine UV-Bestrahlung, kann der Randbereich 13 die Reifendruckmessvorrichtung 7 an deren Ende hintergreifen. Somit kann ein Kraftschluss und/oder ein Formschluss erreicht werden, so dass die Reifendruckmessvorrichtung 7 fest in der gewünschten Position innerhalb der Aufnahme 9 des Befestigungselementes 3 verbleibt.

Beim Einführen des ersten Befestigungsbereichs 19 in den zweiten Befestigungsbereich 45 (vgl. auch Fig. 1 und Fig. 2) gleitet der Rastbereich 23 entlang der Führungsflächen 49 in die Aufnahme 47. Dabei wird der Rastbereich 23 von den Führungsflächen 49 leicht nach Innen bewegt, bis er an dem Rast- und/oder Schnapppunkt 51 angelangt ist. Hier ist der Verformungsgrad des Rastbereichs 23 am höchsten. Bei einer weiteren auf das Befestigungselement 3 einwirkenden Kraft in Richtung des Ventils 5 wird der Rast-Schnapppunkt 51 überwunden. Der Rastbereich 23 nimmt im Wesentlichen seine ursprüngliche Form an. Bei in Längsrichtung senkrecht wirkenden Kräften, wirken Kräfte auf die beiden umlaufend überstehenden Rasten 25. Diese sitzen in den Aussparungen fest und leiten so die Kraft in den Ventilfuß ab. Daher ist es nicht möglich, das Befestigungselement 5 senkrecht nach unten aus der Rastverbindung und somit aus dem Ventil 5 bzw. dem dortigen zweiten Befestigungsbereich 45 zu entfernen.

Fig. 4 zeigt eine Querschnittsansicht der Reifendruckmessvorrichtung 7. Die Reifendruckmessvorrichtung 7 umfasst einen Drucksensor 57 mit einer Energiezufuhr 55, die beispielsweise eine Batterie 55 sein kann, eine Platine 59, eine Steuereinrichtung 61 und eine Kommunikationseinheit 63. Die Steuereinrichtung 61 ist auf der Platine 59 angeordnet, auf der auch eine Elektronik zur (beispielsweise drahtlosen) Übermittlung von Daten vorhanden ist. Die Kommunikationseinheit 63 ist mit der Platine verbunden und weist ein sich wegerstreckende Antenne 65 auf. Für eine feste Verbindung ist die Batterie 55 über Lötfahnen 67 mit der Platine 59 verbunden. Auch die Steuereinrichtung 61 sowie der Drucksensor 57 sind, der darstellungsgemäss an der Platine 59 angeordnet ist, kann mit der Platine 59 baueinheitlich integriert sein. Darstellungsgemäß dient die Batterie 55 als Abdeckung für die weiteren Komponenten der Reifendruckmessvorrichtung 7 und auch als Deckel oder Verschluss der Aufnahme 9 an ihrem darstellungsgemäß rechten, offenen Ende. Dadurch kann ein fluiddichter Verschluss gegenüber dem Reifeninneren erreicht werden.

Bei nicht gezeigten Ausführungsformen kann die Reifendruckmessvorrichtung 7 so angeordnet sein, dass die Energieversorgung 55 zwischen dem darstellungsgemäß linken, dem Ventil 5 benachbarten Ende der Aufnahme 9 und den weiteren Komponenten der Reifendruckmessvorrichtung 7 liegt. Dadurch kann vermieden werden, dass über das Ventil 5 unter Druck zugeführtes Fluid die Reifendruckmessvorrichtung und insbesondere deren elektrische, elektronische und/oder sensorische Komponenten unmittelbar beaufschlagt wird und dadurch Beschädigungen oder Fehlfunktionen auftreten.

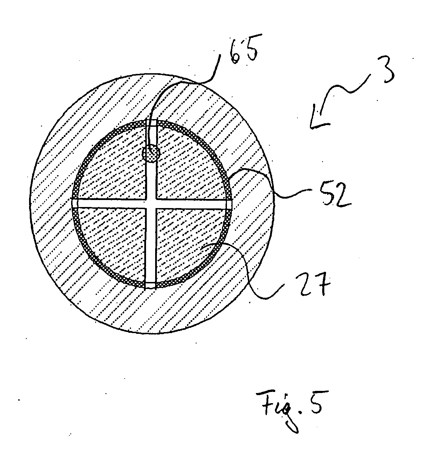

Die Antenne 65 erstreckt sich in den ersten Befestigungsbereich 19 des Befestigungselementes 3 hinein (vgl. Fig. 5) und tritt durch eine Öffnung in dem Rastbereich 23 in Richtung des Ventils 5 zwischen dem elastischen Rastsegment 27 (siehe auch Fig. 5) aus.

Im zusammengesetzten Zustand wird auf Grund der Nähe zum Hauptkörper 31 des Ventils 5 ein Kontakt zwischen der Antenne 65 und dem Hauptkörper 31 ermöglicht. Da der Hauptkörper 31 aus einem Metall, beispielsweise Messing besteht, wirkt dieser wie eine Antenne, über die Druckmesssignale von der Kommunikationseinheit 63 bzw. der Antenne 65 empfangen und an eine externe Empfangseinheit (nicht abgebildet) weitergeleitet werden können. Dabei können Signale, die beispielsweise den Luftdruck des Fahrzeugreifens und/oder Lufdruckabweichungen von Sollwerten, etc. angeben, übermittelt werden.

Wenn die Reifendruckmessvorrichtung 7 innerhalb des Befestigungselementes 5 angeordnet ist, befindet sich der Drucksensor 57 in der Aufnahme 9. Im zusammengesetzten Zustand der Fahrzeugreifendruckmesseinheit 1 (vgl. Fig. 1) besteht über einen Fluidführungskanal 37 des Ventils 5, der in den zweiten Befestigungsbereich 45 mündet, mit dem sich in dem ersten Befestigungsbereich 19 erstreckenden Bereich der Aufnahme 9 des Befestigungselements 3 und der Reifendruckmessvorrichtung 7 eine Fluidverbindung. Fluid, insbesondere zum Reifenfüllen vorgesehenes Gas, kann zu den Fluid-Durchgangsöffnungen 29 und durch diese nach Außen strömen. Im eingebauten Zustand kann auf diese Weise ein Reifen mit Gas gefüllt werden. Fluidströmung in entgegengesetzte Richtung entfernt Gas aus dem Reifen.

Die Rast- bzw. Schnappverbindung kann im Wesentlichen fluiddicht sein, so dass nur geringfügige Fluidmengen an Grenzbereichen zwischen den Befestigungsbereichen 19 und 45 - wenn überhaupt -, austreten können. Fluiddichtigkeit kann sich durch die Bauform der Rast- und/oder Schnappverbindung und/oder (nicht gezeigte) Dichtelemente ergeben. Allerdings kann auf Dichtigkeit verzichtet werden, wenn Fluid nicht unerwünscht aus einem Fahrzeugreifen entweichen kann.

Wie aus Fig. 5 ersichtlich ist, kann Fluid Zwischenräume (nicht bezeichnet) zwischen den elastisch verformbaren Segmenten 27 durchströmen. Das Fluid kann dabei sowohl Luft als auch ein anderes Gas wie beispielsweise Stickstoff sein oder aber ein sonstiges Flüssigkeitsgasgemisch, wie es beispielsweise zur Schaumstofffüllung eines Reifens bekannt ist.

Nach Befüllung des Fahrzeugreifens liegt an dem Drucksensor 57 über die Fluid-Durchgangsöffnung 29 Reifeninnendruck an.

Fig. 5 zeigt eine Aufsicht auf das Befestigungselement 3. Hier ist eine Aufteilung des Rastbereiches 23 in vier symmetrisch angeordnete, gleich große, verformbare elastische Segmente 27 abgebildet. Ferner ist die Antenne 65 gezeigt.

Beim Einrasten des ersten Befestigungsbereiches 19 in den zweiten Befestigungsbereich 45 des Ventils 5 werden die vier elastisch verformbaren Segmente 27 in Richtung ihres gemeinsamen Mittelpunktes bis zum Rast- bzw. Schnapppunkt 51 nach Innen verformt, wonach sie in der Nut 46 einrasten bzw. einschnappen. (vgl. Fig. 1 bis Fig. 4)

Gesamt betrachtet lässt sich bei einer erfindungsgemäßen Ausgestaltung der Fahrzeugreifdruckmesseinheit vorteilhaft das Gesamtgewicht deutlich reduzieren, beispielsweise auf 8,5 bis 9 gr., der Aufbau und die Montage vereinfachen und beschleunigen, sowie die Gesamthöhe um 4 bis 5 mm reduzieren. Auch der Fertigungsprozess wird vorteilhaft beschleunigt und somit die Produktionskosten reduziert. Eine erfindungsgemäße Fahrzeugreifdruckmesseinheit ist bei allen Typen von Reifenfelgen, beispielsweise Stahl- oder Aluminium-Felgen, verwendbar.

### BEZUGSZEICHENLISTE

- 1: Fahrzeugreifendruckmesseinheit
- 3: Befestigungselement
- 5: Ventil
- 7: Reifendruckmessvorrichtung

- **3**: **Befestigungselement:**

- 9: Aufnahme
- 11: Seitenwände
- 13: thermisch verformbaren Bereich
- 15: innerer Anlagebereich
- 17: Anschlag
- 19: erster Befestigungsbereich
- 21: Anlagebereich
- 23: wenigstens teilweise elastisch verformbarer Bereich
- 25: Raste
- 27: elastisches Segment
- 29: Fluid-Durchgangsöffnung

- **5**: **Ventil:**

- 31: Hauptkörper
- 33: Ventilfuß
- 35: Ventilkopf
- 36: Ventilschaft
- 37: Kanal
- 39: Mantel
- 41: Nut
- 43: Wulst
- 45: zweiter Befestigungsbereich
- 46: Aussparung/Nut
- 47: Aufnahme
- 49: Führungsfläche
- 51: Rast/Schnapppunkt
- 52: Rastbereich
- 54: Anlagefläche

- **7**: **Reifendruckmessvorrichtung:**

- 55: Energiezufuhr/Batterie
- 57: Drucksensor
- 59: Platine
- 61: Steuereinrichtung
- 63: Kommunikationseinheit
- 65: Antenne
- 67: Lötverbindung

## Patentansprüche

1. Fahrzeugreifendruckmesseinheit (1), mit
- einem Ventil (5), und
- einem Befestigungselement (3) zur Anordnung einer Reifendruckmessvorrichtung (7) an dem Ventil (5), wobei
- das Befestigungselement (3) einen ersten Befestigungsbereich (19) zur Rast- und/oder Schnappverbindung mit einem an dem Ventil (5) komplementär ausgeformten zweiten Befestigungsbereich (45) zur Sicherung des Befestigungselements (3) und des Ventils (5) aneinander umfasst, und
- das Befestigungselement (3) eine Aufnahme (9) zur Anordnung der Reifendruckmessvorrichtung (7) in dem Befestigungselement (3) umfasst,
**dadurch gekennzeichnet, dass**
- die Aufnahme (9) des Befestigungselements (3) einen Bereich umfasst, der sich in den ersten Befestigungsbereich (19) hinein erstreckt.

2. Fahrzeugreifendruckmesseinheit (1) nach Anspruch 1, bei der wenigstens der Bereich der Aufnahme (9) des Befestigungselements (3), der sich in den ersten Befestigungsbereich (19) hinein erstreckt, als Fluidführung ausgeführt ist.

3. Fahrzeugreifendruckmesseinheit (1) nach einem der vorstehenden Ansprüche, bei der die Aufnahme (9) des Befestigungselements (3) wenigstens einen thermisch verformbaren Bereich (13) umfasst.

4. Fahrzeugreifendruckmesseinheit (1) nach einem der vorstehenden Ansprüche, bei der der erste Befestigungsbereich (19) im zweiten Befestigungsbereich (45) einrastbar oder einschnappbar ist, oder bei der der zweite Befestigungsbereich (45) im ersten Befestigungsbereich (19) einrastbar oder einschnappbar ist.

5. Fahrzeugreifendruckmesseinheit (1) nach einem der vorstehenden Ansprüche, bei der der erste Befestigungsbereich (19) wenigstens einen wenigstens teilweise elastischen Bereich (23) für die Rast- und/oder Schnappverbindung umfasst, oder bei der der zweite Befestigungsbereich (45) wenigstens einen wenigstens teilweise elastischen Bereich (52) für die Rast- und/oder Schnappverbindung umfasst.

6. Fahrzeugreifendruckmesseinheit (1) nach einem der vorstehenden Ansprüche, bei der das Befestigungselement (3) wenigstens eine Fluid-Durchgangsöffnung (29) umfasst.

7. Fahrzeugreifendruckmesseinheit (1) nach einem der vorstehenden Ansprüche, die Reifendruckmessvorrichtung (7) umfassend, wobei die Reifendruckmessvorrichtung (7) mittels des Befestigungselements (3) angeordnet ist, und wobei die Reifendruckmessvorrichtung (7) eine Energiezufuhr (55), einen Drucksensor (57) und eine Platine (59) oder Chip mit einer Steuereinrichtung (61) umfasst.

8. Fahrzeugreifendruckmesseinheit (1) nach einem der vorstehenden Ansprüche, bei der die Reifendruckmessvorrichtung (7) eine Kommunikationseinheit (63) zu drahtlosen Übertragung von Druckmesssignalen umfasst.

9. Fahrzeugreifendruckmesseinheit (1) nach Anspruch 8, bei der die Kommunikationseinheit (63) eine sich wegerstreckende, vorzugsweise elastisch verformbare, Antenne (65) umfasst.

10. Fahrzeugreifendruckmesseinheit (1) nach Anspruch 9, bei der - im zusammengesetzten Zustand - die Antenne (65) einen leitenden Bereich des Ventils (5) kontaktiert oder einen geringen Abstand davon einhält.

11. Fahrzeugreifendruckmesseinheit (1) nach Anspruch 9, bei der - im zusammengesetzten Zustand - sich die Antenne (65) in den ersten Befestigungsbereich (19) hinein, vorzugsweise über diesen hinaus, erstreckt.

12. Befestigungselement (3) zur Anordnung einer Reifendruckmessvorrichtung (7) an einem Ventil (5) in einer Fahrzeugreifendruckmesseinheit (1), mit
- einem ersten Befestigungsbereich (19) zur Rast- und/oder Schnappverbindung mit einem an dem Ventil (5) komplementär ausgeformten zweiten Befestigungsbereich (45) zur Sicherung des Befestigungselements (3) und des Ventils (5) aneinander, wobei
- das Befestigungselement (3) eine Aufnahme (9) zur Anordnung der Reifendruckmessvorrichtung (7) in dem Befestigungselement (3) umfasst,
**dadurch gekennzeichnet, dass**
- die Aufnahme (9) des Befestigungselements (3) einen Bereich umfasst, der sich in den ersten Befestigungsbereich (19) hinein erstreckt.

13. Messanordnung für eine Fahrzeugreifendruckmesseinheit (1) mit einem Befestigungselement (3) nach Anspruch 12 und einer Reifendruckmessvorrichtung (7).

14. Verwendung einer Reifendruclanessvorrichtung (7) in einer Fahrzeugreifendruckmesseinheit (1) nach einem der Ansprüche 1 bis 11.

## Claims

1. Vehicle tire pressure measurement unit (1) comprising:
- a valve (5) and
- a fastening element (3) for arrangement of a tire pressure measurement device (7) on the valve (5), wherein
- the fastening element (3) includes a first fastening area (19) for catch and/or snap connection with a second fastening area (45) formed in complementary fashion on the valve (5) to secure the fastening element (3) and the valve (5) to each other, and
- the fastening element (3) includes a receptacle (9) for arrangement of the tire pressure measurement device (7) in the fastening element (3),
**characterized in that**
- the receptacle (9) of the fastening element (3) includes an area that extends into the first fastening area (19).

2. Vehicle tire pressure measurement unit (1) according to claim 1, wherein at least the area of the receptacle (9) of the fastening element (3) that extends into the first fastening area (19) is designed as fluid guide.

3. Vehicle tire pressure measurement unit (1) according to one of the preceding claims, in which the receptacle (9) of the fastening element (3) includes at least one thermally deformable area (13).

4. Vehicle tire pressure measurement unit (1) according to one of the preceding claims, in which the first fastening area (19) can be caught or snapped into the second fastening area (45), or in which the second fastening area (45) can be caught or snapped into the first fastening area (19).

5. Vehicle tire pressure measurement unit (1) according to one of the preceding claims, in which the first fastening area (19) includes at least one at least partially elastic area (23) for the catch and/or snap connection, or in which the second fastening area (45) includes at least one at least partially elastic area (52) for the catch and/or snap connection.

6. Vehicle tire pressure measurement unit (1) according to one of the preceding claims, in which the fastening element (3) includes at least one fluid passage opening (29).

7. Vehicle tire pressure measurement unit (1) according to one of the preceding claims, including the tire pressure measurement device (7), in which the tire pressure measurement device (7) is arranged by means of the fastening element (3), and in which the tire pressure measurement device (7) includes a power supply (55), a pressure sensor (57) and a circuit board (59) or chip with a control device (61).

8. Vehicle tire pressure measurement unit (1) according to one of the preceding claims, in which the tire pressure measurement device (7) comprises a communication unit (63) for wireless transmission of pressure measurement signals.

9. Vehicle tire pressure measurement unit (1) according to claim 8, in which the communication unit (63) includes a protruding antenna (65) preferably being elastically deformable.

10. Vehicle tire pressure measurement unit (1) according to claim 9, in which the antenna (65) in the assembled state contacts a conducting area (5) of the valve or maintains a small distance therefrom.

11. Vehicle tire pressure measurement unit (1) according to claim 9, in which the antenna (65) in the assembled state extends into the first fastening area (19), preferably extending beyond the first fastening area (19).

12. Fastening element (3) for arrangement of a tire pressure measurement device (7) on a valve (5) in a vehicle tire pressure measurement unit (1) comprising
- a first fastening area (19) for catch and/or snap connection with a second fastening area (45) formed in complementary fashion on the valve (5) to secure the fastening element (3) and the valve (5) to each other, wherein
- the fastening element (3) includes receptacle (9) for arrangement of the tire pressure measurement device (7) in the fastening element (3)
**characterized in that**
- the receptacle (9) of the fastening element (3) includes an area that extends into the first fastening area (19).

13. Measurement arrangement for a vehicle tire pressure measurement unit (1) comprising a fastening element (3) according to claim 12 and a tire pressure measurement device (7).

14. Use of a tire pressure measurement device (7) in a vehicle tire pressure measurement unit (1) according to one of the claims 1 to 11.

## Revendications

1. Unité de mesure de pression des pneus de véhicule (1) avec
- une soupape (5) et
- un élément de fixation (3) pour l'agencement d'un dispositif de mesure de pression des pneus (7) sur la soupape (5),
- l'élément de fixation (3) comportant une première zone de fixation (19) pour la liaison par encliquetage et/ou enclenchement avec une seconde zone de fixation (45) formée en complément sur la soupape (5) pour le blocage de l'élément de fixation (3) et de la soupape (5) l'un sur l'autre, et
- l'élément de fixation (3) comportant un logement (9) pour l'agencement du dispositif de mesure de pression des pneus (7) dans l'élément de fixation (3),
**caractérisée en ce que**
- le logement (9) de l'élément de fixation (3) comporte une zone qui s'étend dans la première zone de fixation (19).

2. Unité de mesure de pression des pneus de véhicule (1) selon la revendication 1, pour laquelle au moins la zone du logement (9) de l'élément de fixation (3) qui s'étend dans la première zone de fixation (19), est réalisée comme un guidage de fluide.

3. Unité de mesure de pression des pneus de véhicule (1) selon l'une quelconque des revendications précédentes, pour laquelle le logement (9) de l'élément de fixation (3) comporte au moins une zone (13) déformable thermiquement.

4. Unité de mesure de pression des pneus de véhicule (1) selon l'une quelconque des revendications précédentes, pour laquelle la première zone de fixation (19) peut être encliquetée ou enclenchée dans la seconde zone de fixation (45) ou pour laquelle la seconde zone de fixation (45) peut être encliquetée ou enclenchée dans la première zone de fixation (19).

5. Unité de mesure de pression des pneus de véhicule (1) selon l'une quelconque des revendications précédentes, pour laquelle la première zone de fixation (19) comporte au moins une zone (23) au moins en partie élastique pour la liaison par encliquetage et/ou enclenchement, ou pour laquelle la seconde zone de fixation (45) comporte au moins une zone (52) au moins en partie élastique pour la liaison par encliquetage et/ou enclenchement.

6. Unité de mesure de pression des pneus de véhicule (1) selon l'une quelconque des revendications précédentes, pour laquelle l'élément de fixation (3) comporte au moins une ouverture de passage de fluide (29).

7. Unité de mesure de pression des pneus de véhicule (1) selon l'une quelconque des revendications précédentes, comportant le dispositif de mesure de pression des pneus (7), le dispositif de mesure de pression des pneus (7) étant disposé à l'aide de l'élément de fixation (3) et le dispositif de mesure de pression des pneus (7) comportant une alimentation en énergie (55), un capteur de pression (57) et une platine (59) ou une puce avec un dispositif de commande (61).

8. Unité de mesure de pression des pneus de véhicule (1) selon l'une quelconque des revendications précédentes, pour laquelle le dispositif de mesure de pression des pneus (7) comporte une unité de communication (63) pour la transmission sans fil de signaux de mesure de pression.

9. Unité de mesure de pression des pneus de véhicule (1) selon la revendication 8, pour laquelle l'unité de communication (63) comporte une antenne (65) s'étendant au loin, de préférence déformable élastiquement.

10. Unité de mesure de pression des pneus de véhicule (1) selon la revendication 9, pour laquelle, à l'état assemblé, l'antenne (65) touche une zone conductrice de la soupape (5) ou observe une faible distance par rapport à celle-ci.

11. Unité de mesure de pression des pneus de véhicule (1) selon la revendication 9, pour laquelle, à l'état assemblé, l'antenne (65) s'étend dans la première zone de fixation (19), de préférence au-delà de celle-ci.

12. Élément de fixation (3) pour l'agencement d'un dispositif de mesure de pression des pneus (7) sur une soupape (5) dans une unité de mesure de pression des pneus de véhicule (1) avec
- une première zone de fixation (19) pour la liaison par encliquetage et/ou enclenchement avec une seconde zone de fixation (45) formée en complément sur la soupape (5) pour le blocage de l'élément de fixation (3) et de la soupape (5) l'un sur l'autre,
- l'élément de fixation (3) comportant un logement (9) pour l'agencement du dispositif de mesure de pression des pneus (7) dans l'élément de fixation (3),
**caractérisé en ce que**
- le logement (9) de l'élément de fixation (3) comporte une zone qui s'étend dans la première zone de fixation (19).

13. Ensemble de mesure pour une unité de mesure de pression des pneus de véhicule (1) avec un élément de fixation (3) selon la revendication 12 et un dispositif de mesure de pression des pneus (7).

14. Utilisation d'un dispositif de mesure de pression des pneus (7) dans une unité de mesure de pression des pneus de véhicule (1) selon l'une quelconque des revendications 1 à 11.
